# EUROPÄISCHE PATENTSCHRIFT

(11) **EP 1 327 128 B1**
(45) Veröffentlichungstag und Bekanntmachung des Hinweises auf die Patenterteilung: **19.08.2009**
(21) Anmeldenummer: 01987874.3
(22) Anmeldetag: 15.09.2001
(51) Int. Cl.: G01L 9/00

(54) **DRUCKMESSANORDNUNG**
PRESSURE MEASURING ARRANGEMENT
DISPOSITIF DE MESURE DE PRESSION

(30) Priorität: 19.10.2000 DE 10052079
(43) Veröffentlichungstag der Anmeldung: 16.07.2003
(73) Patentinhaber: Endress + Hauser GmbH + Co. KG, 79689 Maulburg (DE)
(72) Erfinder: BANHOLZER, Karl-Heinz, 79688 Hausen (DE); FLÖGEL, Karl, 79650 Schopfheim (DE); HEGNER, Frank, 79540 Lörrach (DE); ROSSKOPF, Bernd, 79688 Hausenheim (DE)
(74) Vertreter: Andres, Angelika Maria
(86) Internationale Anmeldenummer: PCT/EP2001/010686
(87) Internationale Veröffentlichungsnummer: WO 2002/033373

(56) Entgegenhaltungen:
- WO-A-95/28623
- US-A- 4 414 851
- US-A- 5 212 989

## Beschreibung

Die Erfindung betrifft eine Druckmeßanordnung mit einer Druckmeßzelle und einer Druckaufnahmeeinheit, bei der im Betrieb ein zu messender Druck auf die Druckaufnahemeeinheit einwirkt und in einen dem zu messenden Druck entsprechenden Druck umgewandelt wird, der über eine flüssigkeitsgefüllte Verbindung vom Druckaufnehmer zur Druckmeßzelle der Druckmeßzelle zugeführt ist.

Solche Druckmeßanordnungen werden eingesetzt, wenn ein zu messender Druck der Druckmeßzelle nicht direkt zugeführt werden kann. Dies ist z.B. dann der Fall, wenn die Druckmeßzelle gegenüber chemischen und/oder mechanischen Belastungen sehr empfindliche ist, wie dies z.B. bei piezoresistiven Druckmeßzellen, die z.B. Meßmembranen aus oder mit empfindlichen Halbleiterbauelementen aufweisen, der Fall ist, oder wenn eine Differenz zwischen zwei an verschiedenen Orten wirkenden Drücken mit einer als Differenzdruckmeßzelle ausgebildeten Meßzelle erfaßt werden. Solche Druckmeßanordnungen werden auch eingesetzt, wenn eine keramische Druckmeßzelle verwendet werden soll und, z.B. aus hygienischen Gründen, ein frontbündiger Abschluß zum Prozeß gewünscht ist.
Diese Druckmeßanordnungen müssen im Anschluß an deren Fertigung mit einer Flüssigkeit gefüllt werden, die den dem zu messenden Druck entsprechenden Druck überträgt. Hierzu wird die Meßanordnung z.B. evakuiert und in ein Bad mit der Flüssigkeit eingebracht und geflutet. Anschließend werden die Befüllungsöffnungen verschlossen und die Meßanordnung kann an einem Einsatzort angeschlossen werden.

Da die Befüllung verhältnismäßig aufwendig ist und spezielle Betriebsmittel erfordert, wird eine einmal fertiggestellte Meßanordnung in der Regel nicht mehr verändert.

Um ein hohes Maß an Flexibilität hinsichtlich in kurzer Zeit lieferbarer Meßanordungen, z.B. möglicher Kombinationen verschiedener Druckmeßzellen mit unterschiedlichen Druckmeßaufnehmern, z.B. unterschiedlichen Ölvorlagen, oder unterschiedlich langen Druckleitungen, zu erzielen, ohne alle möglichen Varianten von Druckmeßanordnungen in ausreichender Anzahl lagern zu müssen, ist es daher wünschenswert eine solche Druckmeßanordnung modular auszubilden und nach Bedarf zusammenzustellen und zu befüllen.

In der US-A 4,833,922 und der US-A-4,414,851 ist ein modular aufgebauter Differenzdruckmeßaufnehmer beschrieben mit
- einer Druckmeßzelle,
   -- der ein einem zu messenden Druck entsprechender Druck über ein flüssigkeitsgefülltes Druckröhrchen zugeführt ist,
- mindestens einer Druckaufnahmeeinheit
   -- auf die im Betrieb ein zu messender Druck einwirkt,
      und
   -- die einen dem zu messenden Druck entsprechenden Druck über eine flüssigkeitsgefüllte Druckleitung zur Verfügung stellt, und
- einer Verbindung zwischen dem Druckröhrchen und der Druckleitung.

Die Differenzdruckmeßzelle ist sehr kompakt aufgebaut. Hierzu ist die Druckmeßzelle unmittelbar in der Druckaufnahmeeinheit angeordnet und die Druckröhrchen sind in Druckleitungen bildende Bohrungen des Druckaufnehmers eingeführt. Es sind kegelstumpfförmige Dichtelemente vorgesehen, die die Druckröhrchen ringfömig umgeben und in formgleiche Ausnehmungen des Druckaufnehmers eingeführt sind. Es ist eine Einspannung vorgesehen, die die Dichtelemente in die formgleichen Ausnehmungen hinein preßt. Die Einspannung umgibt die Druckröhrchen ringförmig und ist z.B. mittels Spannbolzen auf den Druckaufnehmer aufgeschraubt.

Eine solche kompakte Bauweise ist nicht immer einsetzbar. So könne z.B. Platzverhältnissse am Einsatzort, hohe auf den Druckaufnehmer einwirkende Temperaturen oder Druckmeßzellen, die eine besondere, z.B. möglichst einspannungsfreie, Einbauweise erfordern eine räumliche Trennung von Druckmeßzelle und Druckaufnehmer erfordern.

Es ist eine Aufgabe der Erfindung, eine Druckmeßanordnung anzugeben, die modular aufgebaut ist und ein hohes Maß an Flexibilität hinsichtlich der räumlichen Anordnung von Druckmeßzelle und Druckaufnehmer zueinander aufweist.

Hierzu besteht die Erfindung in Druckmeßanordnungen im Sinne der Ansprüche 1 und 2.

Gemäß einer ersten Ausgestaltung ist das Gewinde ein Außengewinde, das in eine Ausnehmung im Grundkörper eingeschraubt ist. Die Druckleitung führt zu der Ausnehmung und die Halterung ist ein mit dem Druckröhrchen mechanisch fest verbundener Ring, der im montierten Zustand mit einer der Druckschraube zugewandten Stirnfläche auf einer grundkörper-zugewandten Stirnfläche der Druckschraube aufliegt.

Gemäß einer weiteren Ausgestaltung läuft das Druckröhrchen endseitig außen konisch zu und liegt abdichtend an einer formgleichen konischen Innenfläche im Bereich der Mündung der Druckleitung an.

Gemäß einer zweiten Ausgestaltung ist die Druckschraube eine Überwurfmutter, die die Form eines einseitig endseitig von einer sich radial nach innen erstreckenden Schulter abgeschlossenen Zylinders aufweist. Der Zylinder weist ein Innengewinde auf, das auf ein Außengewinde des Grundkörpers geschraubt ist, und das Druckröhrchen ist durch die Schulter hindurch in die Überwurfmutter hinein geführt.

Gemäß einer ersten Ausgestaltung der zweiten Ausgestaltung mündet die Druckleitung in den Grundkörper und ist mit diesem dicht und mechanisch fest verbunden, das Druckröhrchen ist mit einer das Druckröhrchen koaxial umgebenden Ringscheibe dicht und mechanisch fest verbunden, eine Stirnfläche der Ringscheibe liegt an einer ringscheibenförmigen Innenfläche der Schulter an, und die Ringscheibe ist durch die Druckschraube in grundkörperzugewandter Richtung gepreßt.

Gemäß einer Ausgestaltung der letztgenannten Ausgestaltung ist zwischen der Ringscheibe und dem Grundkörper ein das Druckröhrchen ringförmig umgebendes Dichtelement vorgesehen, durch das ein durch die Ringscheibe, das Dichtelement und den Grundkörper begrenzter, das Druckröhrchen umschließender Hohlraum abgedichtet ist.

Gemäß einer zweiten Ausgestaltung der zweiten Ausgestaltung ist das Druckröhrchen im Inneren der Druckschraube durch Bördelung aufgeweitet, die Druckleitung ist in das Druckröhrchen eingeführt, die Druckleitung ist durch den Grundkörper hindurch geführt und mit diesem mechanisch fest verbunden, die Druckleitung läuft endseitig außen konisch zu und ein aufgebördelter Endabschnitt des Druckröhrchens ist zwischen einer im Inneren der Druckschraube angeordneten konischen Mantelfläche und dem konischen Abschnitt der Druckleitung abdichtend eingespannt, indem die Mantelfläche durch die Druckschraube in grundkörper-zugewandter Richtung gegen die Druckleitung gepreßt ist.

Gemäß einer dritten Ausgestaltung der zweiten Ausgestaltung ist in der Druckschraube endseitig ein Klemmkonus angeordnet, der eine äußere in grundkörper-zugewandter Richtung konisch zulaufende Mantelfläche aufweist, der das Druckröhrchen umgreift und in dem das Druckröhrchen eingespannt ist, indem der Klemmkonus durch die Druckschraube mit dessen konischer Mantelfläche in eine dem Klemmkonus zugewandte in klemmkonus-abgewandter Richtung konisch zulaufende innere Mantelfläche des Grundkörpers hinein gepreßt ist.

Gemäß einer weiteren Ausgestaltung der letztgenannten Ausgestaltung ist an einem der Druckschraube gegenüberliegenden Ende des Grundkörpers eine formgleich zweite Druckschraube vorgesehen, durch die hindurch die Druckleitung in eine den Grundkörper durchdringende Bohrung eingeführt ist, in der endseitig ein zweiter Klemmkonus angeordnet ist, der eine äußere in grundkörper-zugewandter Richtung konisch zulaufende Mantelfläche aufweist, der die Druckleitung umgreift und in dem die Druckleitung eingespannt ist, indem der zweite Klemmkonus durch die zweite Druckschraube mit dessen konischer Mantelfläche in eine dem zweiten Klemmkonus zugewandte in klemmkonus-abgewandter Richtung konisch zulaufende innere Mantelfläche des Grundkörpers hinein gepreßt ist.

Die Erfindung und weitere Vorteile werden nun anhand der Figuren der Zeichnung, in denen sieben Ausführungsbeispiele dargestellt sind, näher erläutert. Gleiche Elemente sind in den Figuren mit den gleichen Bezugszeichen versehen.
Fig. 1 zeigt einen Schnitt durch eine erfindungsgemäße Druckmeßanordnung, bei der eine Druckmeßzelle in einem getrennt von einem Druckaufnehmer angeordneten Gehäuse angeordnet ist und ein Druckröhrchen am Druckaufnehmer mit einer Druckleitung des Druckaufnehmers verbunden ist;
Fig. 2 zeigt einen Schnitt durch eine erfindungsgemäße Druckmeßanordnung, bei der eine Druckmeßzelle in einem getrennt von einem Druckaufnehmer angeordneten Gehäuse angeordnet ist und eine Druckleitung am Gehäuse mit einem Druckröhrchen der Druckmeßzelle verbunden ist;
Fig. 3 zeigt einen Schnitt durch eine erfindungsgemäße Verbindung zwischen einem Druckröhrchen und einer Druckleitung die vom Druckaufnehmer und von der Druckmeßzelle beabstandet ist;
Fig. 4 zeigt einen Schnitt durch eine weitere erfindungsgemäße Verbindung zwischen einem Druckröhrchen und einer Druckleitung die vom Druckaufnehmer und von der Druckmeßzelle beabstandet ist;
Fig. 5 zeigt einen Schnitt durch ein weiteres Ausführungsbeispiel einer erfindungsgemäßen Verbindung zwischen einem Druckröhrchen und einer Druckleitung, bei dem ein endseitig aufgebördelter Abschnitt des Druckröhrchens zur Fixierung des Druckröhrchens dient und eine Abdichtung durch konisch ausgebildete Mantelflächen von Druckröhrchen und Druckleitung erfolgt;
Fig. 6 zeigt einen Schnitt durch eine Klemmkonus-verbindung zwischen einer Druckleitung und einem Druckröhrchen; und
Fig. 7 zeigt einen Schnitt durch eine Verbindung zwischen einer Druckleitung und einem Druckröhrchen, bei der die Druckleitung und das Druckröhrchen jeweils mittels einer Klemmkonusverbindung mit einem Grundkörper verbunden sind.

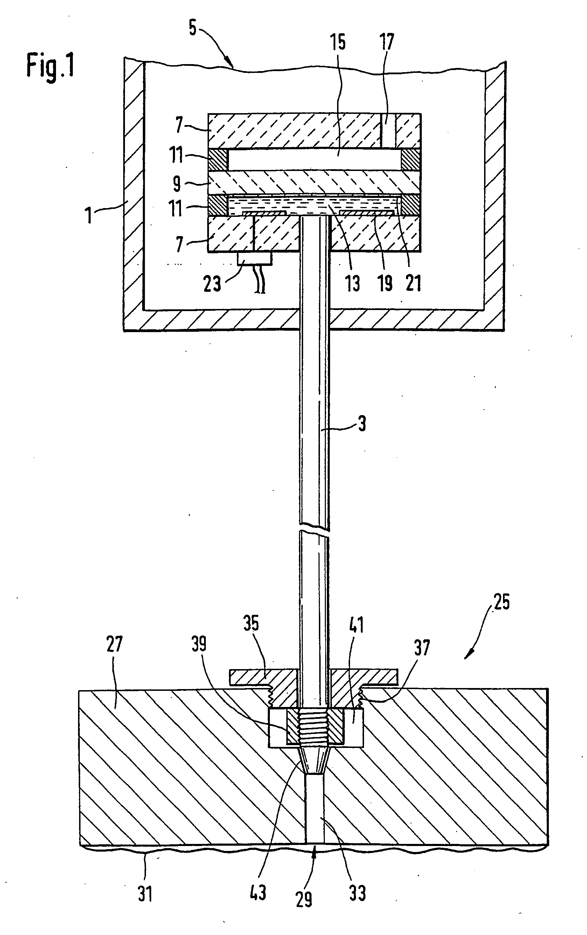

Fig. 1 zeigt einen Schnitt durch eine erfindungsgemäße Druckmeßanordnung. Sie weist eine in einem Gehäuse 1 einspannungsfrei auf ein Druckröhrchen 3 aufgelötete kapazitive keramische Druckmeßzelle 5, hier eine Relativdruckmeßzelle, auf.

Die Druckmeßzelle 5 umfaßt zwei keramische Grundkörper 7 zwischen denen eine Membran 9 angeordnet ist. Die Membran 9 ist mittels zweier ringförmiger Fügestellen 11 mit den Grundkörpern 7 unter Bildung einer ersten und einer zweiten Kammer 13, 15 verbunden. Die erste Kammer 13 ist über eine Bohrung im Grundkörper 7 mit dem Druckröhrchen 3 verbunden. In dem gezeigten Ausführungsbeispiel ist das Druckröhrchen 3 in die Bohrung im Grundkörper 7 eingelötet. Über das Druckröhrchen 3 ist der Druckmeßzelle 5 ein einem zu messenden Druck entsprechender Druck zugeführt.

Hierzu ist die erste Kammer 13 und das Druckröhrchen 3 mit einer weitestgehend inkompressiblen Flüssigkeit, z.B. einem Silikonöl gefüllt, die mit diesem Druck beaufschlagt ist.

Die zweite Kammer 15 ist über eine durch den an diese angrenzenden Grundkörper durchgehende Bohrung 17 gegenüber einem Innenraum des Gehäuses 1 der Druckmeßzelle 5 geöffnet. Eine Auslenkung der Membran 9 ist somit abhängig von dem dem zu messenden Druck entsprechenden Druck bezogen auf den im Innenraum des Gehäuses wirkenden Umgebungsdruck. Die Auslenkung der Membran wird durch einen in der ersten Kammer 13 angeordneten Kondensator erfaßt, der eine auf einer membran-zugewandten Grundfläche des Grundkörpers 7 angeordnete Meßelektrode 19 und eine dieser gegenüberliegend auf der Membran 9 aufgebrachte Gegenelektrode 21 aufweist. Die Meßelektrode 19 ist zur Erfassung der momentanen Kapazität über eine Durchkontaktierung durch den Grundkörper 7 hindurch mit einer elektronischen Schaltung 23 verbunden, die die Kapazität in ein elektrisches Ausgangssignal umwandelt und über Anschlußleitungen einer weiteren Verarbeitung und/oder Auswertung zur Verfügung stellt.

Getrennt von dem Gehäuse 1 und der Druckmeßzelle 5 ist mindestens eine Druckaufnahmeeinheit 25 angeordnet. In dem dargestellten Ausführungsbeispiel ist nur eine Druckaufnahmeeinheit 25 vorgesehen. Wäre anstelle der dargestellten Relativdruckmeßzelle eine Differenzdruckmeßzelle vorgesehen, so wären selbstverständlich zwei Druckaufnahmeeinheiten vorgesehen, die über jeweils eine Druckleitung an ein Druckröhrchen angeschlossen sind. Eine solche Differenzdruckmeßzelle könnte z.B. ähnlich zu der beschriebenen keramischen Relativdruckmeßzelle aufgebaut sein. Man erhält aus der beschriebenen Relativdruckmeßzelle eine Differenzdruckmeßzelle, indem man in die in Fig. 1 dargestellte offene Bohrung der zweiten Kammer 15 ein zweites Druckröhrchen einführt, das mit einer zweiten Druckleitung eines zweiten Druckaufnehmers verbunden ist. Die Druckübertragung vom zweiten Druckaufnehmer in die zugehörige Kammer erfolgt über eine Flüssigkeit mit der der Druckaufnehmer, die zweite Druckleitung, das zweite Druckröhrchen und die Kammer gefüllt sind.

Die in Fig. 1 dargestellte Druckaufnehmereinheit 25 weist einen Grundkörper 27 und eine frontseitig unter Einschließung einer Kammer 29 darauf mit deren äußerem Rand befestigte Trennmembran 31 auf. Im Betrieb wirkt auf die Trennmembran 31 der Druckaufnahmeeinheit 25 der zu messende Druck ein. Grundkörper 27 und Trennmembran 31 bestehen aus einem Metall, z.B. einem Edelstahl.

Der Grundkörper 27 weist eine durchgehende Bohrung auf, deren eines Ende in der Kammer 29 mündet. Die Bohrung bildet eine Druckleitung 33 und ist genau wie die Kammer 29 mit einer weitestgehend inkompressiblen Flüssigkeit, z.B. einem Silikonöl, gefüllt. Ein im Betrieb außen auf die Trennmembran 31 einwirkender zu messender Druck wird in der Kammer 29 in einen diesem entsprechenden Druck umgewandelt, unter dem die Flüssigkeit steht und der über die flüssigkeitsgefüllte Druckleitung 33 zur Verfügung steht.

Es ist eine Verbindung zwischen dem Druckröhrchen 3 und der Druckleitung 33 vorgesehen. Die Verbindung umfaßt den Grundkörper 27, in dem mindestens ein Endabschnitt der Druckleitung 33 angeordnet ist. In dem gezeigten Ausführungsbeispiel ist die gesamte Druckleitung 33 in dem Grundkörper 27 angeordnet.

Weiter umfaßt die Verbindung eine Druckschraube 35, durch die das Druckröhrchen 3 hindurch geführt ist. Auf einer grundkörper-zugewandten Seite der Druckschraube 35 ist eine Halterung 39 vorgesehen, durch die das Druckröhrchen 3 gesichert ist. In dem dargestellten Ausführungsbeispiel ist die Halterung 39 ein mit dem Druckröhrchen 3 mechanisch fest verbundener Ring, der im montierten Zustand mit einer der Druckschraube 35 zugewandten Stirnfläche auf einer grundkörper-zugewandten Stirnfläche der Druckschraube 35 aufliegt. In dem dargestellten Ausführungsbeispiel ist die mechanische Befestigung durch ein an das Druckröhrchen 3 angeformtes Außengewinde realisiert, auf das die Halterung 39 aufgeschraubt ist. Die Position des Außengewindes bestimmt wie weit das Druckröhrchen 3 aus der Druckschraube 35 und der Halterung 39 herausragt. Selbstverständlich sind auch andere mechanisch feste Verbindungen, die eine Bewegung des Druckröhrchens 3 in grundkörper-abgewandter Richtung unterbinden, einsetzbar. So kann das Druckröhrchen 3 z.B. in die Halterung 39 eingelötet oder eingeschweißt sein.

Die Druckschraube 35 weist ein Gewinde 37 auf, mittels dessen sie derart in den Grundkörper 27 geschraubt ist, daß das Druckröhrchen 3 und die Druckleitung 33 in Verbindung stehen und eine Abdichtung zwischen dem Druckröhrchen 3 und der Druckleitung 33 wirksam ist.
In dem in Fig. 1 dargestellten Ausführungsbeispiel ist das Gewinde 37 ein Außengewinde, das in eine zylindrische Ausnehmung 41 im Grundkörper 27 eingeschraubt ist. Für den Fall, das die Druckschraube 35 ein Rechtsgewinde aufweist, ist die Halterung 39 vorzugsweise mit einem Linkesgewinde befestigt, um ein Lösen der Halterung 39 beim Einschrauben der Druckschraube 35 auszuschließen.

Das Druckröhrchen 3 besteht aus einem Metall, z.B. einem Edelstahl. Die Halterung 39 besteht vorzugsweise ebenfalls aus einem Metall. Die Druckleitung 33 führt zu der Ausnehmung 41 und mündet dort. Das Druckröhrchen 3 läuft endseitig außen konisch zu und liegt abdichtend an einer formgleichen konischen Innenfläche 43 des Grundkörpers 27 im Bereich der Mündung der Druckleitung 33 an. Die Halterung 39 befindet sich dabei im Inneren der Ausnehmung 41 und das Druckröhrchen 3 wird durch das Einschrauben der Druckschraube 35 und die dardurch auf die Halterung 39 ausgeübte Kraft in grundkörper-zugewandter Richtung gegen die Mündung der Druckleitung 33 gepreßt, so daß die Abdichtung der Verbindung zwischen dem Druckröhrchen 3 und der Durckleitung 33 durch die hierdurch gegeneinander gepreßten konischen Mantelflächen wirksam ist.

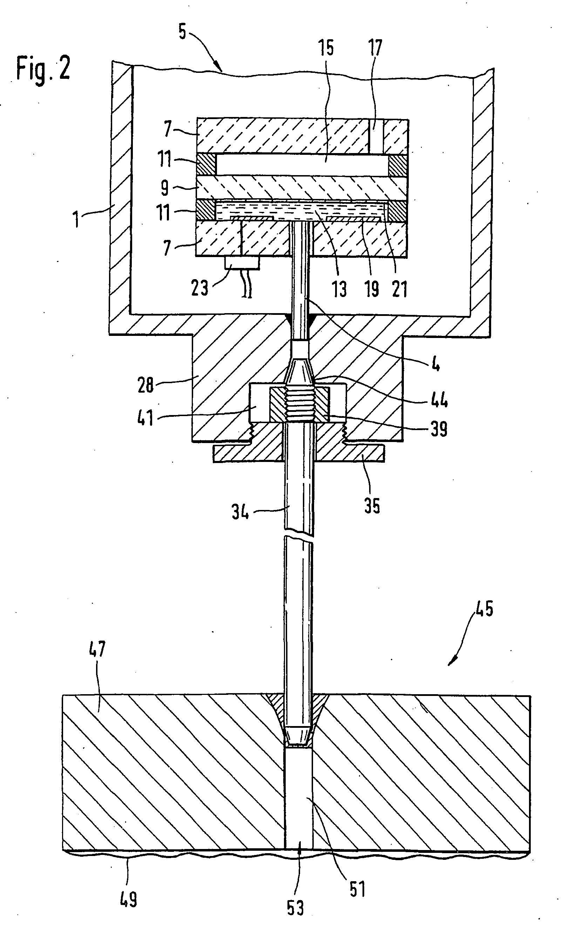

Fig. 2 zeigt ein Ausführungsbeispiel, das im wesentlichen mit dem in Fig. 1 dargestellten Ausführungsbeispiel übereinstimmt. Im Unterschied zu dem in Fig. 1 dargestellten Ausführungsbeispiel erfolgt die Verbindung jedoch nicht unmittelbar am Druckaufnehmer 45 sondern nahe der Druckmeßzelle 5. Hierzu weist das Gehäuse 1 im Bereich der Austrittsstelle der Druckleitung 4 einen daran angeformten Grundkörper 28 auf. Das Druckröhrchen 4 ist in eine den Grundkörper 28 durchdringe Bohrung eingelötet und mündet dort. Es ist also mindestens ein Endabschnitt des Druckröhrchens 4 im Grundkörper 28 angeordnet. Der Grundkörper 28 weist analog zu dem in Fig. 1 dargestellten Ausführungsbeispiel eine Ausnehmung 41 auf, in die die Druckschraube 35 eingeschraubt ist. Es ist eine Druckleitung 34 vorgesehen, die vom Druckaufnehmer 25 zum Grundkörper 28 führt und dort durch die Druckschraube 35 hindurch in die Ausnehmung 41 hinein ragt. Genau wie in dem in Fig. 1 dargestellten Ausführungsbeispiel ist auch hier im Inneren der Ausnehmung 41 eine identisch ausgebildete Halterung 39 vorgesehen, durch die die Druckleitung 34 gesichert ist.

Die Abdichtung der Verbindung zwischen der Druckleitung 34 und dem Druckröhrchen 4 erfolgt, indem die Druckleitung 34 endseitig eine konische äußere Mantelfläche aufweist, die durch das Einschrauben der Druckschraube 35 gegen eine formgleiche innere Mantelfläche 44 des Grundkörpers 28 im Bereich der Mündung der Bohrung in die Ausnehmung 41 gepreßt ist. Der Druckaufnehmer 45 weist einen Grundkörper 47 und eine Trennmembran 49 auf und ist ähnlich zu dem in Fig. 1 dargestellten Druckaufnehmer ausgebildet. Der Grundkörper 47 weist eine durchgehende Bohrung 51 auf, die in einer zwischen dem Grundkörper 47 und der Trennmembran 49 eingeschlossenen Kammer 53 mündet. In ein kammer-abgewandtes Ende der Bohrung 51 ist die Druckleitung 34 eingeschweißt oder eingelötet.

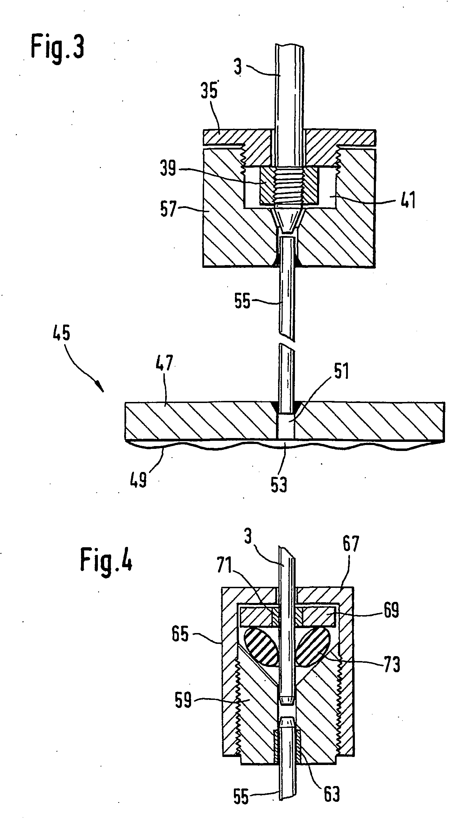

Fig. 3 zeigt ein weiteres Ausführungbeispiel, das den beiden zuvor beschriebenen Ausführungsbeispielen sehr ähnlich ist. Ein in Fig. 3 nicht dargestelltes Gehäuse und eine ebenfalls nicht dargestellte Druckmeßzelle sowie die Druckleitung 3 sind z.B. den entsprechenden Bauteilen von Fig. 1 nachgebildet und der Druckaufnehmer 45 entspricht dem in Fig. 2 dargestellten. In die Bohrung 51 des Druckaufnehmers 45 ist eine Druckleitung 55 eingeschweißt oder eingelötet.

Die Druckleitung 55 ist mit dem Druckröhrchen 3 verbunden, das zu der, in Fig. 3 nicht dargestellten, Druckmeßzelle 5 führt. Es besteht eine vom Druckaufnehmer 45 und der Druckmeßzelle 5 beabstandete Verbindung zwischen dem Druckröhrchen 3 und der Druckleitung 55, die einen Grundkörper 57 aufweist, in dem ein Endabschnitt der Druckleitung 55 angeordnet ist. Druckleitung 55 und Grundkörper 57 bestehen aus einem Metall, z.B. einem Edelstahl. Der Grundkörper 57 weist eine durchgehende Bohrung auf, in die die Druckleitung 55 z.B. eingeschweißt ist.

Die Verbindung von Druckleitung 55 und Druckröhrchen 3 erfolgt analog zu dem in Fig. 1 dargestellten Ausführungsbeispiel mittels einer in die Ausnehmung 41 im Grundkörper 57 eingeschraubten Druckschraube 35, einer Halterung 39 und einer konischen Mantelfläche des Druckröhrchens 3, die durch die Druckschraube 35 gegen eine formgleiche konische Mantelfläche des Grundkörpers 57 im Bereich der Mündung der Druckleitung 55 gepreßt ist, und ist daher hier nicht erneut beschrieben.

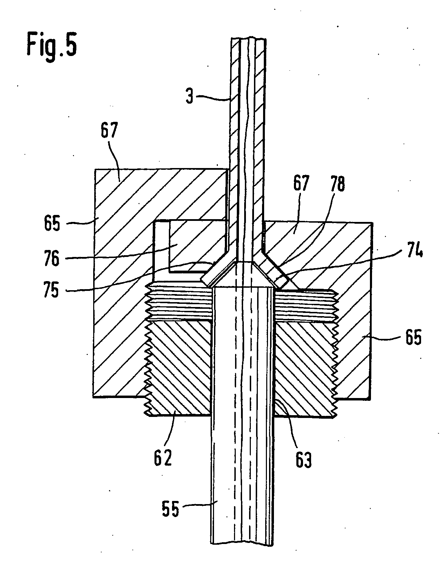

In den Figuren 4 und 5 sind zwei weitere Ausführungsformen von vom Druckaufnehmer und der Druckmeßzelle beabstandeten Verbindungen zwischen dem Druckröhrchen 3 und der Druckleitung 55 dargestellt. Die mit dem Druckröhrchen 3 verbundene Druckmeßzelle 5 und der mit der Druckleitung 55 verbundene Druckaufnehmer 25 sind in den Figuren 4 und 5 nicht dargestellt. Beispiele hierfür können z.B. identisch aus den Figuren 1 und 2 übernommen werden.

Bei den in den Figuren 4 und 5 dargestellten Ausführungsformen umfaßt die Verbindung jeweils einen im wesentlichen zylindrischen Grundkörper 59, 62 mit einer zentralen axialen Bohrung in die die Druckleitung 55 eingeführt und mittels einer Lötung 63 dicht und mechanisch fest verbunden ist.

Es ist jeweils eine Druckschraube 65 vorgesehen, die das Druckröhrchen 3 koaxial umgibt. Die Druckschrauben 65 sind Überwurfmuttern, die die Form eines einseitig endseitig von einer sich radial nach innen erstreckenden Schulter 67 abgeschlossenen Zylinders aufweisen. Die Zylinder weisen ein Innengewinde auf, das auf ein Außengewinde des Grundkörpers 59, 62 geschraubt ist. Die Druckröhrchen 3 sind durch die Schulter 67 hindurch in die Überwurfmutter hinein geführt und mittels einer auf einer grundkörper-zugewandten Seite der Druckschraube 65 angeordneten Halterung gesichert.

Die Überwurfmuttern sind derart auf die Grundkörper 59, 62 geschraubt, daß das Druckröhrchen 3 und die Druckleitung 55 in Verbindung stehen, und eine Abdichtung der Verbindung zwischen dem Druckröhrchen 3 und der Druckleitung 55 wirksam ist. Bei dem in Fig. 4 dargestellten Ausführungsbeispiel besteht die Halterung in einer Ringscheibe 69, die das Druckröhrchen 3 koaxial umgibt und dicht und mechanisch fest, z.B. mittels einer Lötung 71, mit diesem verbunden ist. Die Ringscheibe 69 ist innerhalb der Druckschraube 65 angeordnet und liegt mit einer Stirnfläche an einer ringscheibenförmigen Innenfläche der Schulter 67 an. Die Ringscheibe 69 ist durch die Druckschraube 65 gegen den Grundkörper 59 gepreßt.

Das Druckröhrchen 3 ist durch die Halterung hindurch in den Grundkörper 59 eingeführt. Die Abdichtung der Verbindung erfolgt durch ein zwischen der Ringscheibe 69 und dem Grundkörper 59 angeordnetes, das Druckröhrchen 3 ringförmig umgebendes Dichtelement 73. Durch das Dichtelement 73 ist ein durch die Ringscheibe 69, das Dichtelement 73 und den Grundkörper 59 begrenzter, die Verbindung zwischen dem Druckröhrchen 3 und der Druckleitung 55 einschließender Hohlraum abgedichtet. Das Dichtelement 73 ist in dem gezeigten Ausführungsbeispiel ein Ring mit ovalem Querschnitt, der an einer konischen Stirnfläche des Grundkörpers 59 anliegt. Andere Dichtgeometrien sind ebenfalls einsetzbar. Es besteht aus einem Metall, z.B. aus Kupfer. Die Druckschraube 65 und der Grundkörper 59 bestehen ebenfalls aus einem Metall, z.B. aus einem Edelstahl.

Bei dem in Fig. 5 dargestellten Ausführungsbeispiel ist das Druckröhrchen 3 im Inneren der Druckschraube 65 durch Bördelung aufgeweitet.

Die Druckleitung 55 ist durch den Grundkörper 62 hindurch in das Druckröhrchen 3 eingeführt und ist mit dem Grundkörper durch die Lötung 63 mechanisch fest verbunden.

Die Druckleitung 55 läuft endseitig außen konisch zu. Die Halterung, durch die das Druckröhrchen 3 im Inneren der Druckschraube 65 gesichert ist, besteht im wesentlichen in dem aufgebördelten Abschnitt 74 des Druckröhrchens 3 selbst. Dieser ist zwischen einer im Inneren der Druckschraube 65 angeordneten konischen Mantelfläche 75, 78 und dem konischen Abschnitt der Druckleitung 55 eingespannt, indem die Mantelfläche 75, 78 durch die Druckschraube 65 in grundkörper-zugewandter Richtung gegen die Druckleitung 55 gepreßt ist. Durch diese Einspannung ist die Verbindung zwischen dem Druckröhrchen 3 und der Druckleitung 55 abgedichtet.

Die Mantelfläche 75, 78 ist z.B. wie auf der rechten Seite von Fig. 5 dargestellt eine konische Mantelfläche 78 der Druckschraube 65 selbst, oder, wie auf der linken Seite von Fig. 5 dargestellt, eine konische Mantelfläche 75 eines in der Druckschraube 65 angeordneten Ringzylinders 76.

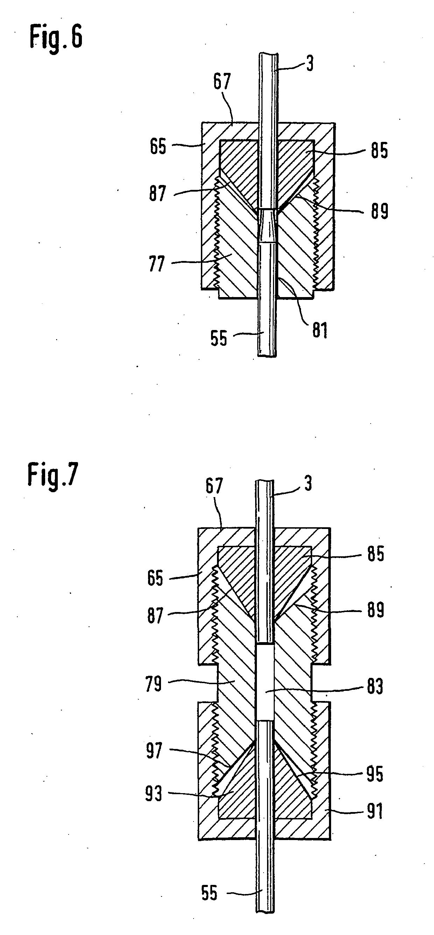

In den Figuren 6 und 7 sind zwei weitere Ausführungsformen der Verbindung zwischen dem Druckröhrchen 3 und der Druckleitung 55 dargestellt. Die mit dem Druckröhrchen 3 verbundene Druckmeßzelle 5 und der mit der Druckleitung 55 verbundene Druckaufnehmer 25 sind auch hier nicht dargestellt. Beispiele hierfür können z.B. identisch aus den Figuren 1 und 2 übernommen werden.

Bei den in den Figuren 6 und 7 dargestellten Ausführungsformen umfaßt die Verbindung jeweils einen im wesentlichen zylindrischen Grundkörper 77, 79 mit einer zentralen axialen Bohrung 81, 83 in die die Druckleitung 55 eingeführt.

Es ist jeweils eine, identisch zu den in den in den Figuren 4 und 5 dargestellten Druckschrauben 65 ausgebildete Druckschraube 65 vorgesehen, die das Druckröhrchen 3 koaxial umgibt. Die Druckschrauben 65 sind Überwurfmuttern, die die Form eines einseitig endseitig von der sich radial nach innen erstreckenden Schulter 67 abgeschlossenen Zylinders aufweisen. Die Zylinder weisen ein Innengewinde auf, das auf ein Außengewinde des Grundkörpers 77, 79 geschraubt ist. Die Druckröhrchen 3 sind durch die Schulter 67 hindurch in die Druckschraube 65 hinein geführt und mittels einer auf einer grundkörperzugewandten Seite der Druckschraube 65 angeordneten Halterung gesichert.

Die Druckschrauben 65 sind derart auf die Grundkörper 77, 79 geschraubt, daß das Druckröhrchen 3 und die Druckleitung 55 in Verbindung stehen, und eine Abdichtung der Verbindung zwischen dem Druckröhrchen 3 und der Druckleitung 55 wirksam ist.

Bei dem in den Figuren 6 und 7 dargestellten Ausführungsbeispielen erfolgt die Abdichtung durch einen in der Druckschraube 65 endseitig angeordneten Klemmkonus 85, der gleichzeitig die Halterung für das durch den Klemmkonus 85 hindurch geführte Druckröhrchen 3 bildet.

Der Klemmkonus 85 umgreift das Druckröhrchen 3 eng und liegt mit einer ringscheibenförmigen Stirnfläche an einer inneren Fläche der Schulter 67 an. Er weist eine äußere in grundkörper-zugewandter Richtung konisch zulaufende Mantelfläche 87 auf. Die Grundkörper 77, 79 weisen jeweils eine in klemmkonus-abgewandter Richtung konisch zulaufende innere Mantelfläche 89 auf. Das Druckröhrchen 3 ist in dem Klemmkonus 85 eingespannt, indem der Klemmkonus 85 durch die Druckschraube 65 mit dessen konischer Mantelfläche in die dem Klemmkonus 85 zugewandte in klemmkonus-abgewandter Richtung konisch zulaufende innere Mantelfläche 89 des jeweiligen Grundkörpers 77, 79 hinein gepreßt ist.

Die konische äußere Mantelfläche 87 des Klemmkonus 85 schließt mit einer Längsachse des Druckröhrchens 3 einen spitzeren Winkel ein als die innere Mantelfläche 89 des jeweiligen Grundkörpers 77, 79. Hierdurch wird ein Anteil der in axialer Richtung durch die Druckschraube 65 auf den Klemmkonus 85 ausgeübten Kraft, in eine Kraft umgewandelt, die in radialer Richtung nach innen wirkt. Letztere führt zu einer Reduzierung der lichten Weite des Klemmkonus 85 und damit zur dichten und mechanisch festen Einspannung des Druckröhrchens 3 im Klemmkonus 85.

Die Grundkörper 77, 79 und die Druckschrauben 65 bestehen auch hier aus Metall, z.B. aus einem Edelstahl. Der Klemmkonus 85 besteht vorzugsweise auch aus einem Metall. Es eignet sich z.B. ein Werkstoff wie z.B. Kupfer, der mechanisch weicher ist als das Material, aus dem die Grundkörper 77, 79 und die Druckschrauben 65 bestehen.
Bei dem in Fig. 6 dargestellten Ausführungsbeispiel ist die Druckleitung 55 mechanisch fest und dicht mit dem Grundkörper 77 verbunden, z.B. indem sie in die Bohrung 81 eingelötet ist.

Bei dem in Fig. 7 dargestellten Ausführungsbeispiel ist lediglich ein Ende Druckleitung 55 in die Bohrung 83 eingeführt und die Druckleitung 55 ist auf die gleiche Weise eingespannt, wie das Druckröhrchen 3.

Hierzu ist an einem der Druckschraube 67 gegenüberliegenden Ende des Grundkörpers 79 eine formgleich zweite Druckschraube 91 vorgesehen, durch die hindurch die Druckleitung 55 in die den Grundkörper 79 durchdringende Bohrung 83 eingeführt ist. Die zweite Druckschraube 91 ist auf den Grundkörper 79 geschraubt. In der zweiten Druckschraube 91 ist endseitig ein zweiter Klemmkonus 93 angeordnet, der eine äußere in grundkörper-zugewandter Richtung konisch zulaufende Mantelfläche 95 aufweist. Der zweite Klemmkonus 93 umgreift die Druckleitung 55. Diese ist in dem Klemmkonus 93 eingespannt, indem der zweite Klemmkonus 93 durch die zweite Druckschraube 91 mit dessen konischer Mantelfläche 95 in eine dem zweiten Klemmkonus 93 zugewandte in klemmkonus-abgewandter Richtung konisch zulaufende innere Mantelfläche 97 des Grundkörpers 79 hinein gepreßt ist.

Selbstverständlich können die in den Figuren 3, 4, 5, 6 und 7 dargestellten Ausführungsbeispiele auch in gespiegelter Form ausgeführt werden können. Die gespiegelte Form erhält man durch einfaches umwandeln der Druckröhrchen 3 und Druckleitungen 55 und der Druckleitungen 55 in Druckröhrchen 3.

## Patentansprüche

1. Druckmeßanordnung mit
- einer Druckmeßzelle (5),
- - der ein einem zu messenden Druck entsprechender Druck über ein flüssigkeitsgefülltes Druckröhrchen (3) zugeführt ist,
- mindestens einer getrennt davon angeordneten Druckaufnahmeeinheit (25, 45),
- - auf die im Betrieb ein zu messender Druck einwirkt,
und
- die einen dem zu messenden Druck entsprechenden Druck über eine flüssigkeitsgefüllte Druckleitung (33, 65) zur Verfügung stellt, und
- einer Verbindung zwischen dem Druckröhrchen (3) und der Druckleitung (33, 55), welche umfaßt:
- einen Grundkörper (27, 57, 59, 62, 77, 79), in dem mindestens ein Endabschnitt der Druckleitung (33, 55) angeordnet ist,
- - eine Druckschraube (35, 65),
durch die das Druckröhrchen (3) hindurch geführt und dort mittels einer auf einer grundkörper-zugewandten Seite der Druckschraube (35, 65) angeordneten Halterung gesichert ist, und
- die ein Gewinde aufweist, mittels dessen sie derart auf den Grundkörper geschraubt ist (27, 67, 59, 62, 77, 79), daß
- --- das Druckröhrchen (3) und die Druckleitung (33, 55) in Verbindung gebracht sind, und
- --- durch das Einschrauben eine Abdichtung der Verbindung wischen dem Druckröhrchen (3) und der Druckleitung (33, 55) bewirkt ist

2. Druckmeßanordnung mit
- einer Druckmeßzelle (5),
- - der ein einem zu messenden Druck entsprechender Druck über ein flüssigkeitsgefülltes Druckröhrchen (4) zugeführt ist,
- mindestens einer getrennt davon angeordneten Druckaufnahmeeinheit (45),
- - auf die im Betrieb ein zu messender Druck einwirkt, und
- die einen dem zu messenden Druck entsprechenden Druck über eine flüssigkeitsgefüllte Druckleitung (34) zur Verfügung stellt, und
- einer Verbindung zwischen dem Druckröhrchen (4) und der Druckleitung (34), welche umfaßt:
- - einen Grundkörper (28), in dem mindestens ein Endabschnitt des Druckröhrchens (4) angeordnet ist,
- eine Druckschraube (35),
- -- durch die die Druckleitung (34) hindurch geführt und dort mittels einer auf einer grundkörper-zugewandten Seite der Druckschraube (35) angeordneten Halterung gesichert ist, und
- -- die ein Gewinde aufweist, mittels dessen sie derart auf den Grundkörper geschraubt ist (28), daß
- --- das Druckröhrchen (4) und die Druckleitung (34) in Verbindung gebracht sind, und
- --- durch das Einschrauben eine Abdichtung der Verbindung zwischen dem Druckröhrchen (4) und der Druckleitung (34) bewirkt ist

3. Druckmeßanordnung nach Anspruch 1 oder 2, bei der
- das Gewinde ein Außengewinde ist,
- - das in eine Ausnehmung (41) im Grundkörper (27, 28, 57) eingeschraubt ist,
- die Druckleitung (33, 55) oder das Druckröhrchen (4) zu der Ausnehmung (41) führt,
- die Halterung (39) ein mit dem Druckröhrchen (3) oder der Druckleitung (4) mechanisch fest verbundener Ring ist,
-- der im montierten Zustand mit einer der Druckschraube (35) zugewandten Stirnfläche abdichtend auf einer grundkörper- zugewandten Stirnfläche der Druckschraube (35) aufliegt.

4. Druckmeßanordnung nach Anspruch 3, bei der das Druckröhrchen (3) oder die Druckleitung (34) endseitig außen konisch zuläuft und abdichtend an einer förmgleichen konischen Innenfläche im Bereich der Mündung der Druckleitung (33, 55) oder des Druckröhrchens (4) anliegt.

5. Druckmeßanordnung nach Anspruch 1, bei der
- die Druckschraube (65) eine Überwurfmutter ist,
- - die die Form eines einseitig endseitig von einer sich radial nach innen erstreckenden Schulter (67) abgeschlossenen Zylinders aufweist,
- der Zylinder ein Innengewinde aufweist, das auf ein Außengewinde des Grundkörpers (59, 61, 62, 77, 79) geschraubt ist, und
- das Druckröhrchen (3) durch die Schulter (67) hindurch in die Druckschraube (67) hinein geführt ist.

6. Druckmeßanordnung nach Anspruch 5, bei der
- die Druckleitung (55) in den Grundkörper (59) mündet und mit diesem dicht und mechanisch fest verbunden ist,
- das Druckröhrchen (3) mit einer das Druckröhrchen (3) koaxial umgebenden Ringscheibe (69) dicht und mechanisch fest verbunden ist,
- eine Stirnfläche der Ringscheibe (69) an einer ringscheibenförmigen Innenfläche der Schulter (67) anliegt, und
- die Ringscheibe (69) durch die Druckschraube (65) in grundkörper-zugewandter Richtung gepreßt ist.

7. Druckmeßanordnung nach Anspruch 6, bei der zwischen der Ringscheibe (69) und dem Grundkörper (59) ein das Druckröhrchen (3) ringförmig umgebendes Dichtelement (73) vorgesehen ist, durch das ein durch die Ringscheibe (69), das Dichtelement (73) und den Grundkörper (59) begrenzter, das Druckröhrchen (3) umschließender Hohlraum abgedichtet ist.

8. Druckmeßanordnung nach Anspruch 5, bei der
- das Druckröhrchen (3) im Inneren der Druckschraube (65) durch Bördelung aufgeweitet ist,
- die Druckleitung (55) in das Druckröhrchen (3) eingeführt ist,
- die Druckleitung (55) durch den Grundkörper (62) hindurch geführt ist und mit diesem mechanisch fest verbunden ist,
- die Druckleitung (55) endseitig außen konisch zuläuft, und
- ein aufgebördelter Endabschnitt (74) des Druckröhrchens (3) zwischen einer im Inneren der Druckschraube (65) angeordneten konischen Mantelfläche (75, 78) und dem konischen Abschnitt der Druckleitung (55) abdichtend eingespannt ist, indem die Mantelfläche (75, 78) durch die Druckschraube (65) in grundkörper-zugewandter Richtung gegen die Druckleitung (55) gepreßt ist.

9. Druckmeßanordnung nach Anspruch 5, bei der
- in der Druckschraube (65) endseitig ein Klemmkonus (85) angeordnet ist,
- der eine äußere in grundkörper-zugewandter Richtung konisch zulaufende Mantelfläche (87) aufweist,
- der das Druckröhrchen (3) umgreift und
- in dem das Druckröhrchen (3) eingespannt ist,
- indem der Klemmkonus (85) durch die Druckschraube (65) mit dessen konischer Mantelfläche in eine dem Klemmkonus (85) zugewandte in klemmkonus-abgewandter Richtung konisch zulaufende innere Mantelfläche (89) des Grundkörpers (77, 79) hinein gepreßt ist.

10. Druckmeßanordnung nach Anspruch 9, bei der
- an einem der Druckschraube (65) gegenüberliegenden Ende des Grundkörpers (79) eine formgleich zweite Druckschraube (91) vorgesehen ist, durch die hindurch die Druckleitung (55) in eine den Grundkörper (79) durchdringende Bohrung (83) eingeführt ist,
- - in der endseitig ein zweiter Klemmkonus (93) angeordnet ist,
- - der eine äußere in grundkörper-zugewandter Richtung konisch zulaufende Mantelfläche (95) aufweist,
- -- der die Druckleitung (55) umgreift und
- -- in dem die Druckleitung (55) eingespannt ist,
- --- indem der zweite Klemmkonus (93) durch die zweite Druckschraube (93) mit dessen konischer Mantelfläche (95) in eine dem zweiten Klemmkonus (93) zugewandte in klemmkonus-abgewandter Richtung konisch zulaufende innere Mantelfläche (97) des Grundkörpers (79) hinein gepreßt ist.

## Claims

1. Pressure measuring arrangement with
- a pressure measuring cell (5)
- - to which a pressure, corresponding to a pressure to be measured, is supplied via a liquid-filled pressure tube (3)
- at least one pressure recording unit (25, 45) arranged separately
- - on which a pressure to be measured acts during operation and
- - which makes a pressure, corresponding to the pressure to be measured, available via a liquid-filled pressure pipe (33, 55)
- a connection between the pressure tube (3) and the pressure pipe (33, 55), which comprises:
- - a meter body (27, 57, 59, 62, 77, 79) in which at least one end section of the pressure pipe (33, 55) is arranged
- - a thrust screw (35, 65)
- -- through which the pressure tube (3) is guided and is secured in place by a holder arranged on a side of the thrust screw (35, 65) facing towards the meter body
- - and which exhibits a thread by means of which it is screwed onto the meter body (27, 57, 59, 62, 77, 79) in such a way that
- -- the pressure tube (3) and the pressure pipe (33, 55) are in contact
- -- screwing in the screw causes the connection between the pressure tube (3) and the pressure pipe (33, 55) to be sealed.

2. Pressure measuring arrangement with
- a pressure measuring cell (5)
- - to which a pressure, corresponding to a pressure to be measured, is supplied via a liquid-filled pressure tube (4)
- at least one pressure recording unit (45) arranged separately
- - on which a pressure to be measured acts during operation and
- - which makes a pressure, corresponding to the pressure to be measured, available via a liquid-filled pressure pipe (34)
- a connection between the pressure tube (4) and the pressure pipe (34), which comprises:
- - a meter body (28) in which at least one end section of the pressure tube (4) is arranged
- - a thrust screw (35)
- -- through which the pressure pipe (34) is guided and is secured in place by a holder arranged on a side of the thrust screw (35) facing towards the meter body
- - and which exhibits a thread by means of which it is screwed onto the meter body (28) in such a way that
- -- the pressure tube (4) and the pressure pipe (34) are in contact
- -- screwing in the screw causes the connection between the pressure tube (4) and the pressure pipe (34) to be sealed.

3. Pressure measuring arrangement as per Claim 1 or 2 where
- the thread is a male thread
- - which is screwed into a recess (41) in the meter body (27, 28, 57)
- the pressure pipe (33, 55) or the pressure tube (4) leads to the recess (41)
- the holder (39) is a ring that is permanently connected mechanically to the pressure tube (3) or the pressure pipe (4)
- - when mounted, said ring bears, with a sealing effect, on an end face of the thrust screw (35) that faces the meter body with an end face that faces the thrust screw (35).

4. Pressure measuring arrangement as per Claim 3 where the pressure tube (3) or the pressure pipe (34) tapers at the end on the outside and bears, with a sealing effect, on a similarly shaped conical inner surface in the area of the opening of the pressure pipe (33, 55) or the pressure tube (4).

5. Pressure measuring arrangement as per Claim 1 where
- the thrust screw (65) is a thread adapter nut
- - which has the shape of cylinder sealed at the end on one side by a shoulder (67) extending radially inwards.
- the cylinder exhibits a female thread that is screwed to a male thread of the meter body (59, 61, 62, 77, 79) and
- the pressure tube (3) is routed through the shoulder (67) and into the thrust screw (67)

6. Pressure measuring arrangement as per Claim 5 where
- the pressure pipe (55) ends in the meter body (59) and is permanently connected mechanically to the meter body in a leak-tight manner
- the pressure tube (3) is permanently connected mechanically to an annular disc (69), which coaxially surrounds the pressure tube (3), in a leak-tight manner
- an end face of the annular disc (69) bears on an inner surface of the shoulder (67), said surface having the shape of an annular disc.
- the annular disc (69) is pressed by the thrust screw (65) in the direction facing towards the meter body

7. Pressure measuring arrangement as per Claim 6 where a sealing element (73), which annularly surrounds the pressure tube (3), is provided between the annular disc (69) and the meter body (59) and seals a cavity which encloses the pressure tube (3) and is delimited by the annular disc (69), the sealing element (73) and the meter body (59).

8. Pressure measuring arrangement as per Claim 5 where
- the pressure tube (3) is enlarged by a border in the inside of the thrust screw (65)
- the pressure pipe (55) is inserted into the pressure tube (3)
- the pressure pipe (55) is guided through the meter body (62) and is permanently connected mechanically to said meter body
- the pressure pipe (55) tapers externally at the end - a bordered end section (74) of the pressure tube (3) is clamped between a conical surface shell (75, 78) arranged inside the thrust screw (65) and the conical section of the pressure pipe (55), such that it has a sealing effect, by the surface shell (75, 78) being pressed against the pressure pipe (55) by the thrust screw (65) in the direction that faces the meter body.

9. Pressure measuring arrangement as per Claim 5 where
- a clamping cone (85) is arranged at the end in the thrust screw (65)
- - said clamping cone exhibiting an external surface shell (87) that tapers in the direction facing the meter body and
- - which encompasses the pressure tube (3) and
- - in which the pressure tube (3) is clamped
- -- by the thrust screw pressing the clamping cone (85) by its conical shell into an inner surface shell (89) of the meter body (77, 79) which faces the clamping cone (85) and tapers in the direction facing away from the clamping cone.

10. Pressure measuring arrangement as per Claim 9 where
- a second thrust screw (91) of the same shape is provided on an end of the meter body (79) opposite the thrust screw (65). Through this screw, the pressure pipe (55) is introduced into a borehole (83) that penetrates the meter body (79)
- - in which a second clamping cone (93) is arranged at the end
- -- which exhibits an external surface shell (95) that tapers in the direction facing towards the meter body
- -- which encompasses the pressure pipe (55) and
- -- in which the pressure pipe (55) is clamped
- -- by the second thrust screw (93) pressing the second clamping cone (93) by its conical shell (95) into an inner surface shell (97) of the meter body (79) which faces the second clamping cone (93) and tapers in the direction facing away from the clamping cone.

## Revendications

1. Circuit de mesure de pression avec
- une cellule de mesure de pression (5),
- - à laquelle est acheminée une pression correspondant à la pression à mesurer par l'intermédiaire d'un tube de pression (3) rempli de liquide,
- au moins une unité de mesure de pression (25, 45) disposée séparément,
- - sur laquelle agit une pression à mesurer pendant le fonctionnement, et
- - qui met à disposition une pression correspondant à la pression à mesurer par l'intermédiaire d'une conduite de pression (33, 55) remplie de liquide, et
- une liaison entre le tube de pression (3) et la conduite de pression (33, 55), laquelle comprend :
- - un corps de base (27, 57, 59, 62, 77, 79), dans lequel est disposée au moins une section finale de la conduite de pression (33, 55),
- - une vis de pression (35, 65),
- -- à travers laquelle le tube de pression (3) est guidé et y est fixé au moyen d'un support disposé sur le côté de la vis de pression (35, 65) faisant face au corps de base, et
- -- qui présente un filetage, au moyen duquel elle est vissée sur le corps de base (27, 57, 59, 62, 77, 79) de telle manière que
- --- le tube de pression (3) et la conduite de pression (33, 55) soient reliés, et
- --- son vissage génère une étanchéité de la liaison entre le tube de pression (3) et la conduite de pression (33, 55).

2. Circuit de mesure de pression avec
- une cellule de mesure de pression (5),
-- à laquelle est acheminée une pression correspondant à la pression à mesurer par l'intermédiaire d'un tube de pression (4) rempli de liquide,
- au moins une unité de mesure de pression (45) disposée séparément,
-- sur laquelle agit une pression à mesurer pendant le fonctionnement, et
-- qui met à disposition une pression correspondant à la pression à mesurer par l'intermédiaire d'une conduite de pression (34) remplie de liquide, et
- une liaison entre le tube de pression (4) et la conduite de pression (34), laquelle comprend :
- - un corps de base (28), dans lequel est disposée au moins une section finale de la conduite de pression (4),
- - une vis de pression (35),
- -- à travers laquelle la conduite de pression (34) est guidée et y est fixée au moyen d'un support disposé sur le côté de la vis de pression (35) faisant face au corps de base, et
- -- qui présente un filetage, au moyen duquel elle est vissée sur le corps de base (28) de telle manière que
- --- le tube de pression (4) et la conduite de pression (34) soient reliés, et
- --- son vissage génère une étanchéité de la liaison entre le tube de pression (4) et la conduite de pression (34).

3. Circuit de mesure de pression selon la revendication 1 ou 2, pour lequel
- le filetage est un filetage extérieur,
- - lequel est vissé dans un évidement (41) du corps de base (27, 28, 57),
- la conduite de pression (33, 55) ou le tube de pression (4) débouche dans l'évidement (41),
- le support (39) est relié par une liaison mécanique fixe au tube de pression (3) ou à la conduite de pression (4),
- - qui, à l'état monté, repose de façon étanche avec une surface frontale faisant face à la vis de pression (35) sur une face frontale de la vis de pression (35) faisant face au corps de base.

4. Circuit de mesure de pression selon la revendication 3, pour lequel le tube de pression (3) ou la conduite de pression (34) se termine de façon conique vers l'extérieur et repose de façon étanche contre une surface intérieure conique de forme identique, au niveau de la sortie de la conduite de pression (33, 55) ou du tube de pression (4).

5. Circuit de mesure de pression selon la revendication 1, pour lequel
- la vis de pression (65) est un écrou-raccord,
- - qui présente en une extrémité la forme d'un cylindre ponctué par un épaulement (67) s'étendant radialement vers l'intérieur,
- le cylindre comporte un taraudage, lequel est vissé sur un filetage du corps de base (59, 61, 62, 77, 79), et
- le tube de pression (3) est guidé à travers la vis de pression (67) par l'épaulement (67).

6. Circuit de mesure de pression selon la revendication 5, pour lequel
- la conduite de pression (55) débouche dans le corps de base (59) et est reliée avec ce dernier de façon étanche et avec une liaison mécanique fixe,
- le tube de pression (3) est relié de façon étanche et avec une liaison mécanique fixe avec un disque annulaire (69) entourant de façon coaxiale le tube de pression (3),
- une face frontale du disque annulaire (69) repose contre une surface intérieure en forme de disque annulaire de l'épaulement (67), et
- le disque annulaire (69) est pressé par la vis de pression (65) en direction du corps de base.

7. Circuit de mesure de pression selon la revendication 6, pour lequel est prévu entre le disque annulaire (69) et le corps de base (59) un élément d'étanchéité (73) annulaire entourant le tube de pression (3), élément à travers lequel un espace creux délimitant le disque annulaire (69), l'élément d'étanchéité (73) et le corps de base (59) et entourant le tube de pression (3), est rendu étanche.

8. Circuit de mesure de pression selon la revendication 5, pour lequel
- le tube de pression (3) est évasé au moyen d'un bord bombé à l'intérieur de la vis de pression (65),
- la conduite de pression (55) est introduite dans le tube de pression (3),
- la conduite de pression (55) est guidée à travers le corps de base (62) et est reliée avec ce dernier par une liaison mécanique fixe,
- la conduite de pression (55) se termine de façon conique vers l'extérieur, et
- une section finale (74) évasée du tube de pression (3) est serrée de façon étanche entre une surface latérale (75, 78) disposée à l'intérieur de la vis de pression (65) et la partie conique de la conduite de pression (55), en ce que la surface latérale (75, 78) est pressée par la vis de pression (65) en direction du corps de base, contre la conduite de pression (55).

9. Circuit de mesure de pression selon la revendication 5, pour lequel
- un cône de serrage (85) est disposé à l'intérieur de la vis de pression (65), en son extrémité,
- - lequel cône présente une surface latérale (87) conique extérieure en direction du corps de base,
- - lequel cône entoure le tube de pression (3) et
- - est serré dans le tube de pression (3),
- -- en ce que le cône de serrage (3) est pressé par la vis de pression (65), avec sa surface latérale conique, dans une surface latérale intérieure conique (89) du corps de base (77, 79), surface faisant face au cône de serrage (85) et s'effilant en direction opposée au cône de serrage.

10. Circuit de mesure de pression selon la revendication 9, pour lequel
- est prévu à une extrémité du corps de base (79) située à l'opposé de la vis de pression (65) une deuxième vis de pression (91) de forme identique, à travers laquelle la conduite de pression (55) est introduite dans un alésage (83) traversant le corps de base (79),
- - dans laquelle vis est disposé un deuxième cône de serrage (93),
- -- qui présente une surface latérale (95) extérieure conique en direction du corps de base,
- -- lequel cône entoure la conduite de pression (55) et
- -- dans lequel la conduite de pression (55) est serrée,
- --- en ce que le deuxième cône de serrage (93) est pressé par la deuxième vis de pression (93), avec sa surface latérale conique (95), dans une surface latérale intérieure conique (97) du corps de base (79), surface faisant face au cône de serrage (93) et s'effilant en direction opposée au cône de serrage.
